# EUROPEAN PATENT SPECIFICATION

(11) **EP 0 925 979 B1**
(45) Date of publication and mention of the grant of the patent: **23.04.2003**
(21) Application number: 98124598.8
(22) Date of filing: 23.12.1998
(51) Int. Cl.: B60K 6/02

(54) **Vehicle drive system**
Fahrzeugantrieb
Transmission pour un véhicule automobile

(30) Priority: 25.12.1997 JP 35861197
(43) Date of publication of application: 30.06.1999
(73) Proprietor: Nissan Motor Co., Ltd., Yokohama city, Kanagawa (JP)
(72) Inventor: Kuroda, Shojiro, Sagamihara city, Kanagawa (JP); Abo, Keiju, Yokohama city, Kanagawa (JP); Takahara, Hideaki, Zama city, Kanagawa (JP)
(74) Representative: Grünecker, Kinkeldey, Stockmair & Schwanhäusser Anwaltssozietät

(56) References cited:
- EP-A- 0 788 914
- US-A- 4 588 040

## Description

This invention relates to a vehicle drive system as indicated in the precharacterizing part of claim 1.

US 4 5 88 040 discloses such a hybrid vehicle drive system wherein an engine and an electric motor/generator are connected to drive wheels via a V-belt continuously variable transmission. Generally, in such a hybrid drive system, the rotation region where the motor/generator works efficiently is different from the region in which the engine functions efficiently. Therefore in this prior art system, a drive ratio of the continuously variable transmission is varied when the motor/generator is made to function as a generator so that the generator rotates in a rotation region where the power generation efficiency is high. Similarly, when the motor/generator is made to function as a motor and a change-over is made between the engine and motor/generator, or when a change-over is made from using one of these devices to using both devices or vice-versa, the drive ratio of the transmission must be varied taking account of the preferable rotation regions of the engine and motor/generator. The drive ratio of the transmission is a ratio of an input rotation speed and an output rotation speed and an output rotation speed of the transmission.

It is the object of the invention to make it unnecessary to change the speed ratio when an engine and motor/generator are changed over, or when there is a change-over from using one of these devices to using both, or vice-versa.

This object is solved in accordance with the invention by the features as claimed in claim 1.

Further developments of the invention are claimed in the sub-claims.

The details as well as other features and advantages of this invention are set forth in the remainder of the specification and are shown in the accompanying drawings.

### DESCRIPTION OF THE PREFERRED EMBODIMENTS

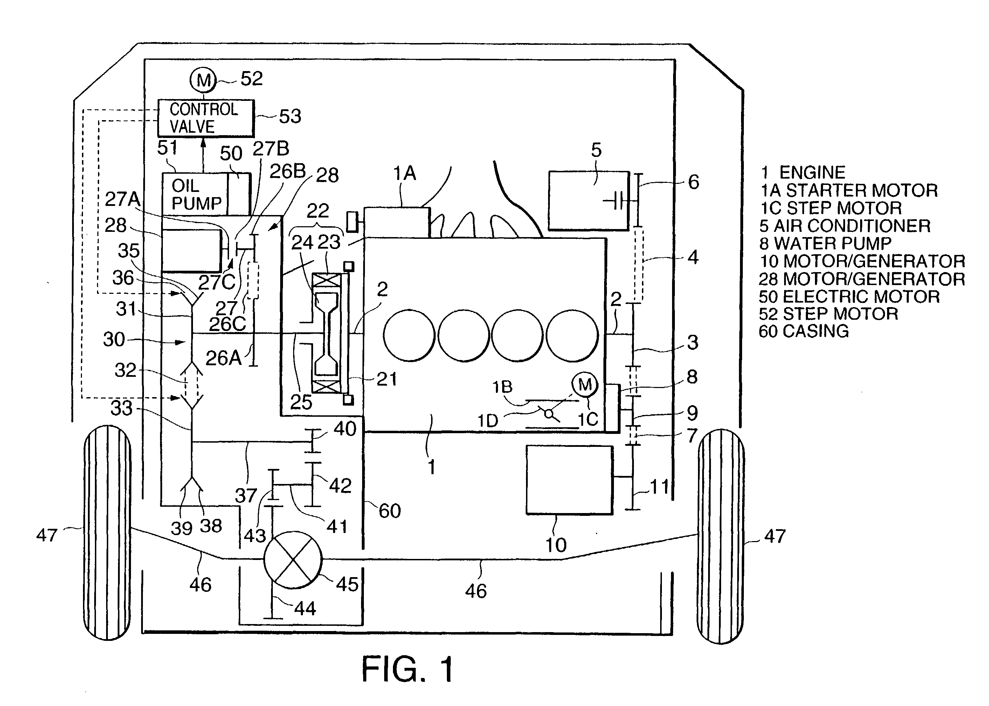

Referring to Fig. 1 of the drawings, a vehicle comprises a parallel hybrid type drive system using a gasoline engine 1 started by a starter motor 1A, two motor/generators 10, 28, and a continuously variable transmission 30.

The motor/generators 10, 28 are triphase induction motors. The rotation speed region of the engine 1 is 900-8000 rpm, and the high efficiency rotation speed region of the motor/generator 28 is 5,000-12,000 rpm.

A crank pulley 3 is connected to one end of a crank axle 2 of the engine 1. The crank pulley 3 drives a pulley 6 of an air conditioner 5 via an auxiliary belt 4, and a pulley 9 of a water pump 8 and a pulley 11 of the motor/generator 10 are driven via another auxiliary belt 7.

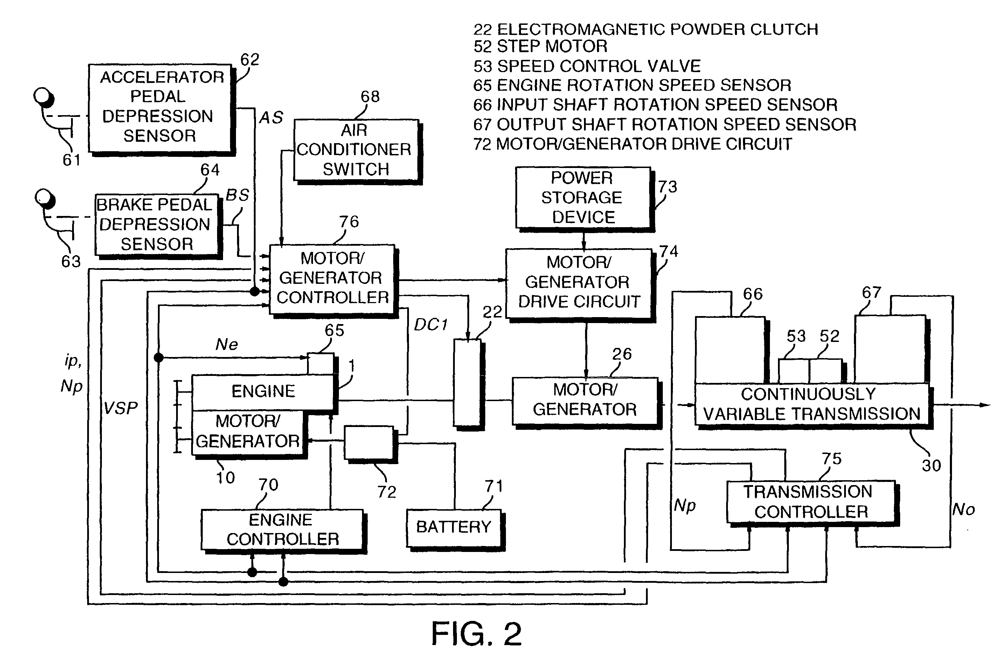

The motor/generator 10 functions as a motor and drives the air conditioner 5 due to a power supply from a battery 71 shown in Fig. 2 when the engine 1 has stopped. The motor/generator 10 charges the battery 71by functioning as a generator and supplies power to accessories, not shown, when the engine 1 is operating.

The other end of the crank axis 2 of the engine 1 is connected to a drive member 23 of an electromagnetic powder clutch 22 via a flywheel 21. The drive member 23 is a ring-shaped member which holds an energizing coil. A driven member 24 of the powder clutch 22 is connected to a drive shaft 25.

The rotation of the drive shaft 25 is input to the V-belt continuously variable transmission 30.

The rotation of the drive shaft 25 is also transmitted to the motor/generator 28 via a wrapping connector transmission device 26 and electromagnetic powder clutch 27.

The wrapping connector transmission device 26 comprises a sprocket 26A fixed to the drive shaft 25, sprocket 26B fixed to a shaft 27C of the electromagnetic powder clutch 27, and a chain 26C looped around the sprockets 26A and 26B. The tooth ratio of the sprockets 26B and 26A is set to a drive transmission ratio such that when the motor/generator 28 is driven as a generator by the engine 1, and is rotating at an upper limit of rotation speed *NMmax* of the high efficiency rotation speed region i.e.,12,000 rpm, the rotation speed of the engine 1 does not exceed an upper limiting value *NEmax* of this rotation speed region i.e., 8,000 rpm. Due to such a setting, the wrapping connector transmission device 26 functions as a deceleration gear.

The electromagnetic powder clutch 27 comprises a drive member 27A connected to the motor/generator 28 and a driven member 27B fixed to the shaft 27C. It is engaged due to energization of magnetic powder interposed between the members 27A, 27B, and is released when the supply of energizing current is stopped.

The V-belt continuously variable transmission 30 is provided with a primary pulley 31, secondary pulley 33 and a V-belt 32 looped around these pulleys.

The primary pulley 31 comprises a fixed wheel 35 fixed to the drive shaft 25 and a movable wheel 36. These wheels form a V-shaped pulley groove to accommodate the V-belt 32. The width of the pulley groove varies according to the axial displacement of the movable wheel 36 in response to oil pressure.

The secondary pulley 33 likewise comprises a fixed wheel 38 fixed to a rotation shaft 37 and a movable wheel 39. These wheels also form a V-shaped pulley groove to accommodate the V-belt 32. The width of this pulley groove width varies according to the axial displacement of the movable wheel 39 in response to oil pressure.

The rotation shaft 37 is connected to a drive gear 40. The drive gear 40 engages with an idler gear 42 supported free to rotate via an idler shaft 41. A pinion 43 also fixed to the idler shaft 41 engages with a final gear 44. The final gear 44 drives drive wheels 47 via a differential gear unit 45 and drive shafts 46.

The motor/generator 28 and continuously variable transmission 30 are housed together with the gear set comprising the drive gear 40 to the final gear 44 in a casing 60.

A oil pressure pump 51 driven by a motor 50 is provided outside the casing 60. Pressurized oil discharged by the hydraulic pump 51 is supplied to the continuously variable transmission 30 as oil pressure for driving the movable wheels 36, 39 via a control valve 53. The control valve 53 regulates the oil pressure according to a rotation position of a step motor 53. The pressurized oil from the hydraulic pump 51 is also supplied as lubricating oil to the components in the casing 60.

Referring to Fig. 2 of the drawings, the motor/generator 28, engine 1 and continuously variable transmission 30 are controlled respectively by a motor/generator controller 76, engine controller 70 and transmission controller 75. These controllers each comprise a microcomputer comprising a central processing unit (CPU), read only-memory (ROM), random access memory (RAM) and input-output interface (I/O interface).

This vehicle is provided with an accelerator pedal 61 and brake pedal 63.

An accelerator pedal depression sensor 62 which detects an accelerator depression degree *AS* and inputs a corresponding signal to the aforesaid three controllers, is fitted to the accelerator pedal 61.

A brake pedal depression sensor 64 which detects a brake depression degree *BS* and inputs a corresponding signal to the aforesaid three controllers, is fitted to the brake pedal 63.

An engine rotation speed sensor 65 which detects an engine rotation speed *Ne* and inputs a corresponding signal to the aforesaid three controllers, is fitted to the engine 1.

An input shaft rotation speed sensor 66 which detects a rotation speed of the primary pulley 31 and an output shaft rotation speed sensor 67 which detects a rotation speed of the secondary pulley 33, are attached to the continuously variable transmission 30.

The input shaft rotation speed and output shaft rotation speed detected by these rotation sensors 66, 67, are input as signals to a transmission controller 75.

Referring again to Fig. 1. the engine 1 is provided with an electronic throttle 1D driven by a step motor 1C to regulate an air intake amount of an air intake passage 1B, as shown in Fig. 1. An engine controller 70 controls the throttle opening of the electronic throttle 1D by a signal output. The output torque of the engine 1 varies accordingly.

The motor/generator 10 is connected to the battery 71 via a motor/generator drive circuit 72 as shown in Fig. 2. The motor/generator drive circuit 72 comprises a chopper and inverter, and maintains the motor/generator 10 in either a motor or a generator state according to a signal from a motor/generator controller 76. The voltage of the battery 71 is 12V. When the engine 1 is running, the motor/generator 10 always functions as a generator. To control the motor/generator 10, a signal showing the operating state of the air conditioner 5 is input to the motor/generator controller 76 from an air conditioner switch 68.

The motor/generator 28 is connected to a power storage device 73 via a motor/generator drive circuit 74. The motor/generator drive circuit 74 comprises a chopper and inverter, and maintains the motor/generator 28 in either a motor or a generator state according to a signal from the motor/generator controller 76. The charge storage device 73 comprises a battery which can be charged to 345V and a capacitor.

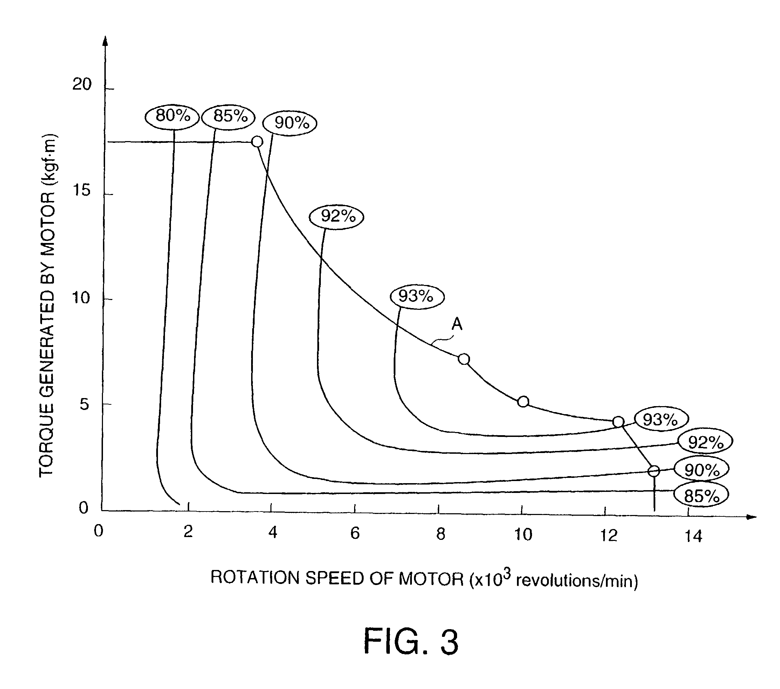

The characteristic of the motor/generator 28 is shown in Fig. 3. Specifically, the motor/generator 28 has a rotation speed region of 0-13,000 rpm, and operates at high efficiency in a rotation speed region of 5,000-12,000 rpm. The percentage values marked in the figure show the efficiency with which the motor/generator 28 converts input electrical energy to output mechanical energy, and the line A in the figure is a maximum output line.

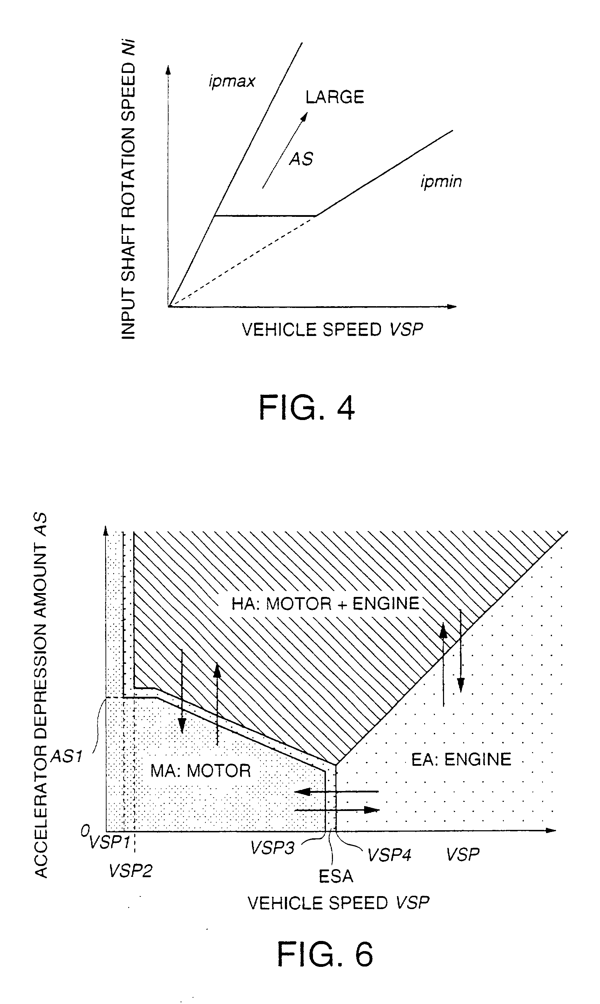

The transmission controller 75 computes a vehicle speed *VSP* from an output shaft rotation speed *No* detected by the output shaft rotation speed sensor 67, and sets a target drive ratio of the transmission within a range from a minimum drive ratio *ipmin* to a maximum drive ratio *ipmax* shown in Fig. 4, based on the input shaft rotation speed *Np* detected by the input shaft rotation speed sensor 66, the accelerator pedal depression degree *AS* detected by the accelerator depression amount sensor 62, and the vehicle speed *VSP. A* real drive ratio *ip* is computed based on the input shaft rotation speed *Np* and output shaft rotation speed *No,* and the step motor 52 is feedback controlled so that the real drive ratio *ip* coincides with the target drive ratio.

The control valve 53 driven by the step motor 52 varies the oil pressure applied to the movable wheels 36, 39 of the continuously variable transmission 30, and varies the contact radii of the pulleys 31, 33 with the V-belt 32. The drive ratio of the continuously variable transmission 30 varies accordingly.

The motor/generator controller 76 controls the motor/generator drive circuits 72, 74 and the electromagnetic powder clutch 22 based on the accelerator pedal depression degree *AS*, brake depression degree *BS*, real drive ratio *ip* computed by the speed change controller 75, vehicle speed *VSP,* engine rotation speed *Ne* and throttle opening *TVO* set by the engine controller 70. Commands to start or stop the engine 1 are also output to the engine controller 70.

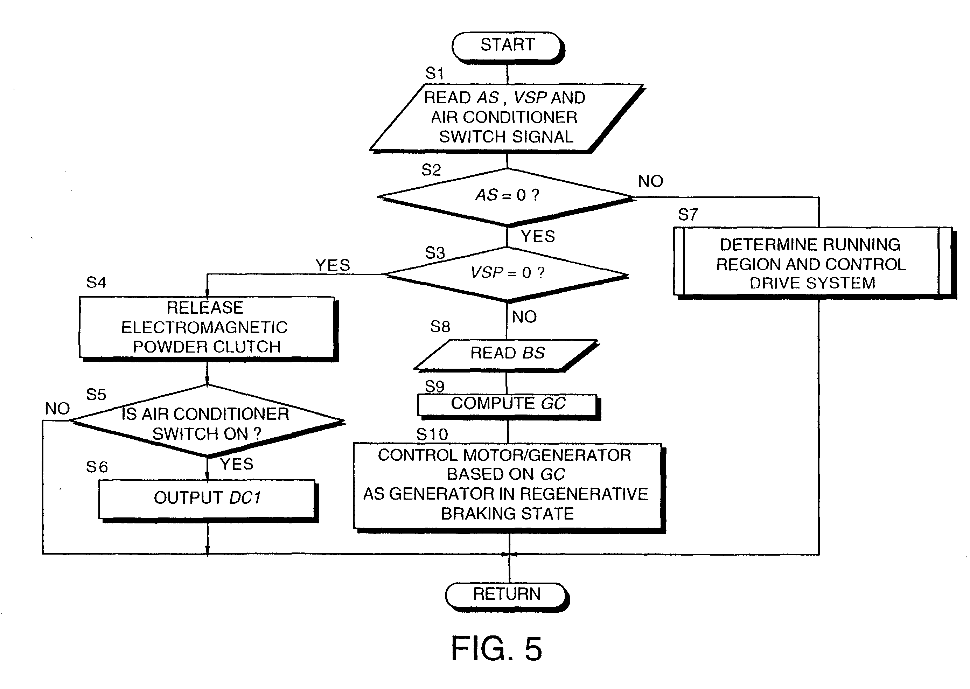

Next, the process whereby motor/generator controller 76 controls the motor/generators 10 and 28 will be described referring to a flowchart of Fig. 5.

In a step S1, the vehicle speed *VSP,* accelerator pedal depression degree *AS* and air conditioner switch signal are read.

In a step S2, it is determined whether or not the accelerator pedal depression degree AS is 0, i.e., whether or not the accelerator pedal 61 is released.

When *AS* = 0, the routine proceeds to a step S3. Here, it is determined whether or not the vehicle speed *VSP* is 0.

When *VSP =* 0, the routine proceeds to a step S4.

In the step S4, the electromagnetic powder clutches 22 and 27 are released. This is done by, for example, outputting a clutch control signal *CL* having a logical value of 0 to the electromagnetic powder clutches 22 and 27.

In the next step S5, it is determined whether or not the air conditioner 5 is ON based on a signal from the air conditioner switch 68, and when the air conditioner 5 is OFF, the routine is terminated without performing subsequent steps.

When the air conditioner 5 is ON, the routine proceeds to a step S6, a drive control signal *DC1* for driving the motor/generator 10 as a motor is output_to the motor/generator drive circuit 72, and the routine is terminated.

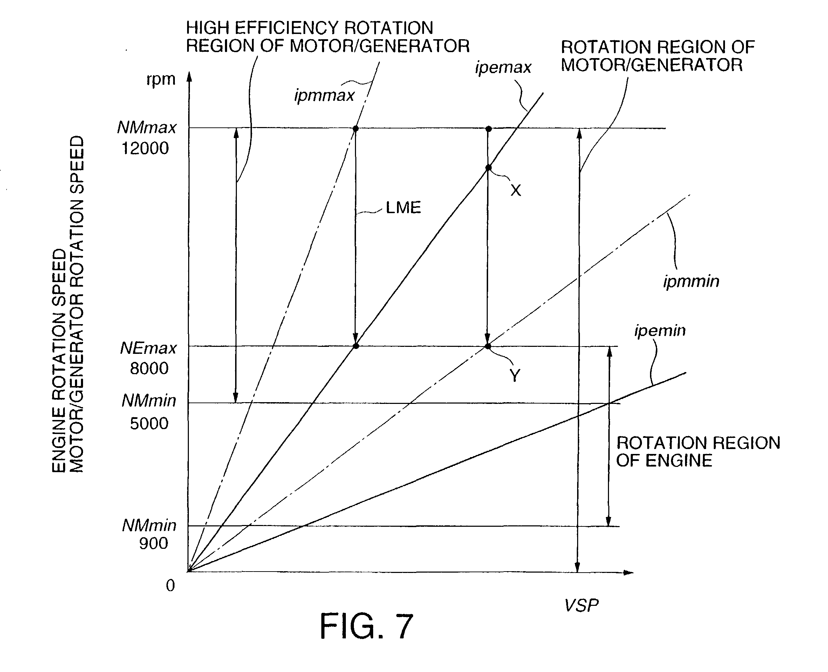

On the other hand, if *AS* ≠ 0 in the step S2, the routine proceeds to a step S7, and control is performed according to four vehicle running regions shown in Fig. 6 based on the accelerator pedal operation degree *AS* and vehicle speed *VSP.*

First, for that purpose, it is determined to which running region the present vehicle running conditions belong. Specifically, a motor running region MA is a region where the vehicle runs only under the output of the motor/generator 28. An engine running region EA is a region where the vehicle runs only under the output of the engine 1.

A hybrid running region HA is a region where only the output of the engine 1 is usually applied, but the motor/generator 28 is used during acceleration. An engine starting region ESA exists at the boundary between the motor running region MA, the region EA which surrounds it and the region HA, and is a region for stating the engine 1.

These regions are preset according to the vehicle speed *VSP* and accelerator pedal depression degree *AS* as shown in Fig. 6, and stored in the motor/generator controller 76 as a map.

Next, the engine 1, motor/generator 28, electromagnetic powder clutch 22 are controlled according to the determined running region, and the process is terminated. The processing of a step S7 is executed as a subroutine. In this subroutine, it is determined according to the following conditions whether the electromagnetic powder clutch 22 is engaged or released. Specifically, when there is a shift from the motor running region MA to the engine start region ESA, the engine 1 starts, and the engine rotating speed *Ne* becomes equal to the input shaft rotating speed *Np* of the continuously variable transmission 30, i.e. to the rotation speed of the motor/generator 28, the electromagnetic powder clutch 22 is engaged.

On the other hand, when the running state moves from the engine running region EA or hybrid running region HA to the motor running region MA, the accelerator pedal depression degree *AS* is more than a predetermined value or the vehicle stops, the electromagnetic powder clutch 22 is released.

In this subroutine, even when the running state is the motor running region MA, when the charge amount of the storage device 73 is low, the engine 1 is started and the motor/generator 28 is operated as a generator to charge the storage device 73.

In a step S3, when the vehicle speed *VSP* is not 0, the routine proceeds to a step S8. Here, a brake pedal depression degree *BS* is read.

In the next step S9, a power generating amount *GC* is found referring to an energy recovery amount computation map which is pre-stored in the motor/generator controller 76, based on the brake pedal operation degree *BS.*

In a step S10, a chopper command value according to the power generation amount *GC* and a generator operation command signal are output to the motor/generator drive circuit 74, and the motor/generator 28 is operated in a regenerative braking state. Due to this, the motor/generator 28 operates as a generator, and the battery of the storage device 73 is charged by the generated power. After this processing, the routine is terminated.

Here, the case will be assumed where for example the accelerator pedal 61 is not depressed at all, and the engine 1, motor/generators 10, 28 and the starter motor 1A have stopped. As the accelerator pedal 61 is released, the accelerator pedal operation amount *AS* is 0.

In this case, the routine proceeds from the step S2 to the step S3, and as the vehicle speed *VSP* is 0, the routine proceeds to the step S4.

In the step S4, the electromagnetic powder clutch 22 is released, and when the air conditioner 5 is ON, the motor/generator 10 operates as a motor in a step S6 to drive the air conditioner 5. When the air conditioner 5 is OFF, the motor/generator 10 is maintained in a stop state.

To start the vehicle, a forward position is selected by a select lever attached to the transmission, not shown, and the accelerator pedal 61 is depressed. The routine therefore proceeds from the step S2 to the step S7 according to the running pattern map of Fig. 6.

Specifically, when the vehicle is started, the electromagnetic powder clutch 27 is first engaged to operate the motor/generator 28 as a motor, and the vehicle starts under the output torque of only the motor/generator 28. In the gradual acceleration state where the depression degree *AS* of the accelerator pedal 61 is small, until the vehicle speed *VSP* reaches a predetermined value *VSP4* shown in Fig. 6, the running of the vehicle depends only on the drive force of the motor/generator 28.

The motor/generator 28 and the continuously variable transmission 30 are connected by the wrapping connector transmission device 26. As the wrapping connector transmission device 26 functions as a deceleration gear,the motor/generator 28 can rotate in a high efficiency rotation speed region even at low vehicle speeds, and a desirable drive force performance is displayed.

When the vehicle speed *VSP* reaches a predetermined value *VSP3* slightly less than the predetermined value *VSP4*, the driving conditions enter the engine,start region EA, and the starter motor 1A starts the engine 1. At the moment when the rotation speed *Ne* of the engine 1 becomes equal to the rotation speed of the drive shaft 25, i.e. to the input rotation speed *Np* of the continuously variable transmission 30, the electromagnetic powder clutch 22 is engaged. Consequently, due to the engaging of the electromagnetic powder clutch 22, a shock due to a rotation speed difference of the drive shaft 25 and the engine 1 does not occur.

The power transmission ratio of the wound transmission device 26 is set to that even if the motor/generator 28 rotates at an upper limiting rotation speed *NMmax* of the high efficiency rotation speed region, the rotation speed of the driving shaft 25 does not exceed the highest rotation speed of the engine 1, as described hereabove.

As stated hereabove, the high efficiency rotation speed region of the motor/generator 28 is 5,000-12,000 rpm while the rotation speed region of the engine 1 is 900-8,000 rpm,but due to the decelerating function of the wrapping connector transmission device 26 differences of rotation speed region are canceled out, and a torque can be input to the continuously variable transmission 30 so as to maintain the engine 1 and motor/generator 28 at rotation speeds which are desirable from the viewpoint of efficiency.

The two solid lines shown in Fig. 7 show a maximum drive ratio *ipemax* of the continuously variable transmission 30 corresponding to a minimum value *NEmin =* 900 rpm of the rotation speed region of the engine 1, and a minimum drive ratio *ipemin* of the continuously variable transmission 30 corresponding to a maximum *NEmax =* 8,000 rpm of the rotation speed region of the engine 1. The two dotted lines of the figure show a maximum drive ratio *ipm*_{*max*} of the continuously variable transmission 30 corresponding to a minimum value *NMmin =* 5,000 rpm of the high efficiency rotation speed region of the motor/generator 28, and a minimum drive ratio *ipmmin* of the continuously variable transmission 30 corresponding to a maximum *NMmin =* 12,000 rpm of the motor/generator 28. The drive ratio corresponding to the motor/generator 28 is a value obtained by multiplying the drive ratio of the continuously variable transmission 30 and the deceleration ratio of the wrapping connector transmission device 26. The deceleration ratio of the wrapping connector transmission device 26 is set so that the rotation speed of the engine 1 is also reaches the maximum value *NEmax* when the rotation speed of the motor/generator 28 reaches maximum *NMmin*, as shown by the line *LME* in Fig. 7.

For example, assume now that the motor/generator 28 is operating in the high efficiency rotation speed region, as shown by the point *X* in the figure, and that the speed ratio of the continuously variable transmission 30 is an intermediate value between the maximum *ipmmin* and minimum *ipm*_{*max*}. If at that time, the engine 1 is being driven at the maximum *NEmax* of the rotation speed region as shown by the point *Y* in the figure, the input rotation speed of the continuously variable transmission 30 coincides with the output rotation speed of the engine 1, so the powder clutch 22 can be engaged immediately without causing any kind of shock.

Therefore, when a rotation of the engine 1 starts to be input to the continuously variable transmission 30, the rotation torques of the engine 1 and motor/generator 28 can be input to the continuously variable transmission 30 in a short time without the need to vary the drive ratio of the continuously variable transmission 30. When the vehicle speed *VSP* reaches the predetermined value *VSP4*, the motor operation command signal and chopper command signal are no longer output to the motor/generator 28 and the electromagnetic powder clutch 27 is released. Following this, the vehicle runs only under the rotation torque of the engine 1.

Next, the case will be considered where the accelerator pedal 61 is largely depressed when the vehicle is not running, and the accelerator pedal depression degree *AS* shown in Fig. 6 is equal to or greater than a predetermined value *AS*_{*1*}. In this case, the vehicle starts rapidly.

In this case also, the electromagnetic powder clutch 27 is engaged, and initially, the vehicle starts under the rotation torque of the motor/generator 28 alone. However, as soon as the vehicle speed *VSP* reaches a small predetermined value *VSP1*, the engine 1 starts. When the engine rotation speed *Ne* coincides with the input shaft rotation speed *Np* of the continuously variable transmission 30, the electromagnetic powder clutch 22 is engaged, and rotation input to the continuously variable transmission 30 from the engine 1 begins.

If the accelerator pedal 61 continues to be depressed when the vehicle speed *VSP* has reached a predetermined value *VSP2,* the vehicle enters a hybrid running state where the extra torque necessary for further acceleration is supplied by the motor/generator 28, while a steady torque is supplied by the engine 1.

In the hybrid running state, when the vehicle speed *VSP* becomes equal to or greater than the predetermined value *VSP4,* the accelerator pedal 61 is returned, and the vehicle shifts to a steady running state. Due to the fall of accelerator pedal depression degree *AS*, the vehicle enters the engine running region EA shown in Fig. 6, and subsequently runs only under the rotation torque of the engine 1.

Similarly, if the accelerator pedal 61 is rapidly depressed while the vehicle is running in the motor running region, due to the increase of accelerator pedal depression degree *AS*, the vehicle enters the hybrid running region HA.

On the other hand, the V-belt continuously variable transmission 30 is controlled independently of the engine controller 70 and motor/generator controller 76 by the transmission controller 75.

When the vehicle is starting, the contact radius between the primary pulley 31 and V-belt 32 is a minimum, and a maximum drive ratio is maintained at which the contact radius of the secondary pulley 33 and V-belt 32 is a maximum. Then, the transmission controller 75 gradually decreases the drive ratio of the continuously variable transmission 30 in accordance with the increase of vehicle speed *VSP* and accelerator pedal depression degree *AS*.

When the accelerator pedal 61 is returned and the vehicle is made to coast or the brake pedal 63 is depressed while the vehicle is running in the engine running region EA or hybrid running region HA, the accelerator pedal depression degree *AS* becomes 0, and the processing of step S8 and subsequent steps in Fig. 5 is performed.

Specifically, a power generation amount GC of the motor/generator 28 is calculated based on the brake pedal depression degree *BS*, generation amount *GC* of motor/generator 28 is calculated, and the motor/generator 28 enters the regenerative braking state. Therefore, the motor/generator 28 generates power due to the rotation torque of the drive wheels transmitted via the continuously variable transmission 30 and wrapping connector transmission device 26, and the rotation resistance is applied to the drive wheels 47 as a braking force.

The rotation speed of the engine 1 in this state is in a lower rotation speed region than the high efficiency rotation speed region of the motor/generator 28.

However, when the wrapping connector transmission device 26 which has a decelerating function rotates in a reverse direction to the torque transmission direction, it has an accelerating function, and the sprocket 26B rotates at a speed in the high efficiency rotation speed region of the motor/generator 28. When the accelerator pedal 61 is returned in the engine running region EA and the electromagnetic powder clutch 27 is engaged, the motor/generator 28 is immediately connected to the drive shaft 25, and regenerative braking begins without varying the drive ratio of the continuously variable transmission 30. Also, when coasting or a braking operation is performed from the hybrid running state, regenerative braking is started immediately without varying the drive ratio of the continuously variable transmission.

In this way, according to this invention, the input shaft of the continuously variable transmission is connected to the motor/generator 28 via the wrapping connector transmission device 26 provided with a decelerating function, and the rotation region of the engine 1 corresponds to the high efficiency rotation speed region of the motor/generator 28.

Therefore, drive ratio change of the transmission 30 due to shifts between running patterns becomes unnecessary, and the capacity of the hydraulic pump 51 supplying oil pressure for varying the drive ratio of the transmission 30 can be suppressed.

In the aforesaid example, the wrapping connector transmission device 26 having a chain 26C was used for connection of the motor/generator 28 and continuously variable transmission 30, but a combination of a toothed belt and toothed pulley or a gear transmission mechanism can be used instead.

When a planetary gear is used as the gear transmission mechanism, two of a sun gear, a planetary carrier and a ring gear are respectively connected to the motor/generator 28 and a shaft 27C and the remaining element is connected to a brake, the electromagnetic powder clutch 27 may be omitted.

Instead of arranging the wrapping connector transmission device 26 having a decelerating function between the motor/generator 28 and drive shaft 25, the motor/generator may be connected directly to the drive shaft 25, and the wrapping connector transmission device having an accelerating function may be arranged between the drive shaft 25 and electromagnetic powder clutch 22.

Further, instead of the motor/generator 28 a separate motor and generator may be used in conjunction.

This invention may be applied also to a drive system wherein a motor that can also function as a generator is connected to the continuously variable transmission 22. Moreover, the continuously variable transmission is not limited to a V-belt type continuously variable transmission 30, and may be, for example, a toroidal continuously variable transmission.

## Claims

1. A vehicle drive system comprising an engine (1), an electrical rotation mechanism (28) comprising a motor (28) that can also function as a generator (28) which is connected to an input shaft (25) of a continuously variable transmission (30), and an output shaft (37) of said continuously variable transmission (30) which is connected to a drive wheel (47),
wherein said system further comprises a power transmission mechanism (26) for transmitting torque between the electrical rotation mechanism (28) and the input shaft (25) connected to the engine (1) under a predetermined input/output rotation ratio,
**characterized in that**
said input/output rotation ratio has a value that cancels a difference between a predetermined rotation speed of said engine (1) and a predetermined rotation speed of said electrical rotation mechanism (28), and
said power transmission mechanism (26) is interposed between said motor (28) and said input shaft (25), and said input/output rotation ratio is set so that a maximum value of rotation speed input to said input shaft (25) from said motor (28) via said power transmission mechanism (26) does not exceed the highest rotation speed of said engine (1).

2. A drive system as defined in claim 1, wherein said power transmission mechanism (26) comprises a wrapping connector transmission device (26).

3. A drive system as defined in claim 1 or 2, wherein, said predetermined rotation speed of said engine (1) is set to 900- 8,000 rpm, and said predetermined rotation speed of said motor (28) is set to 5,000- 12,000 rpm.

4. A drive system as defined in any one of claims 1 to 3, wherein said vehicle is provided with an accelerator pedal (61), and said drive system comprises a sensor (62) for detecting a depression degree of said accelerator pedal (61), a sensor (66) for detecting a rotation speed of said input shaft (25), a sensor (67) for detecting a rotation speed of said output shaft (37) and a first controller (75) for varying said drive ratio of the continuously variable transmission (30) according to said depression degree, said rotation speed of said input shaft (25), and said rotation speed of said output shaft (37).

5. A drive system as defined in claim 4, comprising a first clutch (22) connecting said input shaft (25) and said engine (1), a second clutch (27) connecting said wrapping connector transmission mechanism (26) and said motor (28), and a second controller (76) for connecting or disconnecting said first clutch (21) and said second clutch (27) according to said depression degree and said rotation speed of said output shaft (37).

## Patentansprüche

1. Fahrzeugantriebssystem mit einem Verbrennungsmotor (1), einem elektrischen Drehmechanismus (28), der einen Motor (28) umfasst, der auch als ein Generator (28) arbeiten kann, der mit einer Eingangswelle (25) eines stufenlos veränderlichen Getriebes (30) verbunden ist, und einer Ausgangswelle (37) des stufenlosen Getriebes (30), die mit einem Antriebsrad (47) verbunden ist,
wobei das System des Weiteren einen Kraftübertragungsmechanismus (26) umfasst, der bei einem vorgegebenen Eingangs-/Ausgangs-Umdrehungsverhältnis Drehmoment zwischen dem elektrischen Drehmechanismus (28) und der Eingangswelle (25), die mit dem Verbrennungsmotor (1) verbunden ist, überträgt,
**dadurch gekennzeichnet, dass**
das Eingangs-/Ausgangs-Umdrehungsverhältnis einen Wert hat, der eine Differenz zwischen einer vorgegebenen Umdrehungsgeschwindigkeit des Verbrennungsmotors (1) und einer vorgegebenen Umdrehungsgeschwindigkeit des elektrischen Drehmechanismus (28) aufhebt, und
sich der Kraftübertragungsmechanismus (26) zwischen dem Motor (28) und der Eingangswelle (25) befindet und das Eingangs-/Ausgangs-Umdrehungsverhältnis so eingestellt ist, dass ein Maximalwert der Umdrehungsgeschwindigkeit, die von dem Motor (28) über den Kraftübertragungsmechanismus (26) in die Eingangswelle (25) eingegeben wird, die höchste Umdrehungsgeschwindigkeit des Verbrennungsmotors (1) nicht übersteigt.

2. Antriebssystem nach Anspruch 1, wobei der Kraftübertragungsmechanismus (26) eine Umlaufverbinder-Übertragungsvorrichtung (26) umfasst.

3. Antriebssystem nach Anspruch 1 oder 2, wobei die vorgegebenen Umdrehungsgeschwindigkeit des Verbrennungsmotors (1) auf 900-8000 U/min eingestellt ist und die vorgegebene Umdrehungsgeschwindigkeit des Motors (28) auf 5000-12000 U/min eingestellt ist.

4. Antriebssystem nach einem der Ansprüche 1 bis 3, wobei das Fahrzeug mit einem Gaspedal (61) versehen ist und das Antriebssystem einen Sensor (62), der einen Eindrückgrad des Gaspedals (61) erfasst, einen Sensor (66), der eine Umdrehungsgeschwindigkeit der Eingangswelle (25) erfasst, einen Sensor (67), der eine Umdrehungsgeschwindigkeit der Ausgangswelle (37) erfasst, und eine erste Steuerung (75) umfasst, die das Übersetzungsverhältnis des stufenlos veränderlichen Getriebes (30) entsprechend dem Eindrückgrad, der Umdrehungsgeschwindigkeit der Eingangswelle (25) und der Umdrehungsgeschwindigkeit der Ausgangswelle (37) verändert.

5. Antriebssystem nach Anspruch 5, das eine erste Kupplung (22), die die Eingangswelle (25) und den Verbrennungsmotor (1), eine zweite Kupplung (27), die den Umlaufverbinder-Übertragungsmechanismus (26) und den Motor (28) verbindet, und eine zweite Steuerung (76) umfasst, die die erste Kupplung (21) und die zweite Kupplung (27) entsprechend dem Eindrückgrad und der Umdrehungsgeschwindigkeit der Ausgangswelle (37) ein- oder auskuppelt.

## Revendications

1. Système d'entraînement pour véhicule dans lequel un moteur (1), un mécanisme de rotation électrique (28) comprenant un moteur (28), pouvant aussi fonctionner comme une génératrice (28), qui est couplé à un arbre d'entrée (25) d'une transmission à variation continue (30), et un arbre de sortie (37) de ladite transmission à variation continue (30) qui est couplé à une roue motrice (47),
dans lequel ledit système comprend en outre un mécanisme de transmission de puissance (26) pour transmettre un couple entre le mécanisme de rotation électrique (28) et l'arbre d'entrée (25) couplé au moteur (1) sous un rapport de rotation entrée/sortie prédéterminé,
**caractérisé en ce que**
ledit rapport de rotation entrée/sortie a une valeur qui annule une différence entre une vitesse de rotation prédéterminée dudit moteur (1) et une vitesse de rotation prédéterminée dudit mécanisme de rotation électrique (28), et
ledit mécanisme de transmission de puissance (26) est interposé entre ledit moteur (28) et ledit arbre d'entrée (25), et ledit rapport de rotation entrée/sortie est réglé de telle sorte qu'une valeur maximum de la vitesse de rotation communiquée audit arbre d'entrée (25) depuis ledit moteur (28) via ledit mécanisme de transmission de puissance (26) ne dépasse pas la vitesse de rotation la plus élevée dudit moteur (1).

2. Système d'entraînement selon la revendication 1, dans lequel ledit mécanisme de transmission de puissance (26) comprend un dispositif de transmission à raccord d'enveloppe (26).

3. Système d'entraînement selon l'une des revendications 1 et 2, dans lequel ladite vitesse de rotation prédéterminée dudit moteur (1) est réglée de 900 à 8000 tpm, et ladite vitesse de rotation prédéterminée dudit moteur (28) est réglée de 5000 à 12000 tpm.

4. Système d'entraînement selon l'une quelconque des revendications 1 à 3, dans lequel ledit véhicule est doté d'une pédale d'accélérateur (61), et ledit système d'entraînement comprend un capteur (62) pour détecter un degré de dépression de ladite pédale d'accélérateur (61), un capteur (66) pour détecter une vitesse de rotation dudit arbre d'entrée (25), un capteur (67) pour détecter une vitesse de rotation dudit arbre de sortie (37) et un premier régulateur (75) pour modifier ledit rapport de transmission de la transmission à variation continue (30) en fonction dudit degré de dépression, de ladite vitesse de rotation dudit arbre d'entrée (25), et de ladite vitesse de rotation dudit arbre de sortie (37).

5. Système d'entraînement selon la revendication 4, comprenant un premier embrayage (22) couplant ledit arbre d'entrée (25) audit moteur (1), un second embrayage (27) couplant ledit mécanisme de transmission à raccord d'enveloppe (26) audit moteur (28), et un second régulateur (76) pour coupler ou désaccoupler ledit premier embrayage (21) et ledit second embrayage (27) en fonction dudit degré de dépression et de ladite vitesse de rotation dudit arbre de sortie (37).
